# EUROPÄISCHE PATENTANMELDUNG

(11) **EP 4 707 130 A1**
(43) Veröffentlichungstag der Anmeldung: **11.03.2026**
(21) Anmeldenummer: 25198913.3
(22) Anmeldetag: 29.08.2025
(51) Int. Cl.: B62D 6/00, B62D 15/02

(54) **VERFAHREN ZUM BETREIBEN EINES STEER-BY-WIRE-LENKSYSTEMS, STEUEREINHEIT, STEER-BY-WIRE-SYSTEM UND KRAFTFAHRZEUG**

(30) Priorität: 03.09.2024 BE 202405590
(71) Anmelder: thyssenkrupp Presta AG, 9492 Eschen (LI); thyssenkrupp AG, 45143 Essen (DE)
(72) Erfinder: Mitterrutzner, Andreas, 9470 Buchs SG (CH)
(74) Vertreter: thyssenkrupp Intellectual Property GmbH

(57) **Zusammenfassung**

Die Erfindung betrifft ein Verfahren zum Betreiben eines Steer-by-Wire-Lenksystems (10) für ein Kraftfahrzeug, das ein Lenkrad (11) und wenigstens einen ersten Aktuator (12) umfasst, der die Drehstellung des Lenkrads (11) steuert, und eine Lenkeinrichtung (13), insbesondere eine Zahnstange (14), und wenigstens einen zweiten Aktuator (15) aufweist, der zum Steuern der Lenkstellung wenigstens eines Rades (16) mit der Lenkeinrichtung (13) zusammenwirkt, wobei der erste Aktuator (12) mit dem zweiten Aktuator (15) zur Übertragung eines Lenkstellsignals signalverbunden ist, wobei bei dem Verfahren:
- der erste Aktuator (12) ein Lenkgegenmoment in das Lenkrad (11) einleitet, das einem Fahrerlenkmoment zur Vermittlung eines realen Lenkgefühls entgegenwirkt; und
- der erste Aktuator (12) ein in abwechselnde Lenkrad-Drehrichtungen (DR) wirkendes Vibrationsdrehmoment in das Lenkrad (11) zur Erzeugung von Lenkradvibrationen einleitet, wobei bei dem Verfahren:
- der erste Aktuator (12) so angesteuert wird, dass sich die Amplitude (A) des Vibrationsmoments erhöht;
- ein Bewegungsverhalten der Lenkeinrichtung (13) überwacht wird, wobei bei Erfassen einer Vibrationsbewegung der Lenkeinrichtung (13) das Erhöhen der Amplitude (A) des Vibrationsmoments gestoppt wird; und
- der erste Aktuator (12) so angesteuert wird, dass die Amplitude (A) des Vibrationsmoments auf ihrem gestoppten Niveau (A_{Stopp}) gehalten oder um einen vorbestimmten Wert (A_{Red}) reduziert wird, wobei die Amplitude (A) des Vibrationsmoments auf dem gestoppten Niveau (A_{Stopp}) oder dem reduzierten Wert (A_{Red}) solange gehalten wird, bis sich die erfasste Vibrationsbewegung der Lenkeinrichtung (13) zumindest verringert.

## Beschreibung

Die Erfindung betrifft ein Verfahren zum Betreiben eines Steer-by-Wire-Lenksystems, eine Steuereinheit, ein Steer-by-Wire-Lenksystem und ein Kraftfahrzeug. Ein Verfahren nach dem Oberbegriff des Patentanspruchs 1 ist beispielsweise aus der JP 2022-070111 A bekannt.

Bei einem Steer-by-Wire-Lenksystem sind die gelenkten Räder und das Lenkrad nicht mechanisch, sondern elektrisch gekoppelt. Die gelenkten Räder werden durch Lenksignale gesteuert. Dabei wird häufig die jeweilige Lenkradstellung von einem Lenkwinkelsensor erfasst. Das entsprechende Lenksignal bewirkt, dass sich die Lenkstellung der gelenkten Räder ändert.

Bei elektrisch betriebenen Lenksystemen, wie bei einem Steer-by-Wire-Lenksystem oder auch bei elektrischen Servolenkungen, kommt häufig die Lenkungsvibrationsfunktion zum Einsatz. Diese Funktion wird beispielsweise von einem Spurhalteassistenten genutzt. In diesem Fall überlagert ein zusätzliches Vibrationsmoment das reguläre Lenkmoment, um den Fahrer zu warnen. Dies ist beispielsweise aus der eingangs genannten JP 2022-070111 A bekannt. Bei Kraftfahrzeugen mit einem Steer-by-Wire-Lenksystem wird dieses Drehmoment nicht auf den Lenkstellaktuator, auch "Road Wheel Actuator" (RWA) genannt, angewendet, sondern auf den Lenkradaktuator, auch "Hand Wheel Actuator" (HWA) genannt, angewendet. Der Lenkradaktuator kann auch als Feedback-Aktuator bezeichnet werden, der dem Fahrer ein reales Fahrgefühl vermittelt.

Nun hat sich herausgestellt, dass ein zusätzliches Vibrationsmoment, das dem grundlegenden Lenkmoment überlagert wird, zu einer Schwingungsbewegung des Lenkrads führen kann. Da die Drehlage des Lenkrades die Referenz zur Synchronisierung des Lenkstellers darstellt, kann die Schwingungsbewegung des Lenkrads zu einer ungewollten Schwingung der Lenkeinrichtung, häufig einer Zahnstange führen. Diese zusätzlich zur Lenkbewegung vorliegende Schwingung der Lenkeinrichtung ist nicht erwünscht.

Aus der US 2021/323 599 A1 ist beispielsweise ein Steer-by-Wire-Lenksystem eine Lösung bekannt, bei dem in das Lenkrad ein zusätzliches Drehmoment eingeleitet wird, um den Fahrer bspw. bei Schläfrigkeit oder einem unbeabsichtigten Verlassen der Fahrspur zu warnen. Um eine unerwünschte Lenkbewegung der Räder zu verhindern, wird der Drehwinkel oder der Lenkwinkel des Lenkrades von dem Steuersignal für den Lenkstellaktuator ausgeschlossen, der dem Warnreaktionsmoment am Lenkrad entspricht. Diese Vorgehensweise ist aufwändig.

Der Erfindung liegt die Aufgabe zu Grunde, ein verbessertes Verfahren zum Betreiben eines Steer-by-Wire-Lenksystems anzugeben, das einfach und kostengünstig ist sowie eine Übertragung von unerwünschten Schwingungen/Vibrationen vom Lenkrad auf zumindest ein zu lenkendes Rad verhindert. Der Erfindung liegt ferner die Aufgabe zu Grunde, eine Steuereinheit, eine Steer-by-Wire-Lenksystem und ein Kraftfahrzeug anzugeben.

Erfindungsgemäß wird diese Aufgabe im Hinblick auf das Verfahren durch den jeweiligen Gegenstand der Ansprüche 1 und 10 gelöst. Hinsichtlich der Steuereinheit, des Steer-by-Wire-Lenksystems und des Kraftfahrzeugs wird die vorstehend genannte Aufgabe jeweils durch den Gegenstand der Ansprüche 9 und 11 (Steuereinheit), des Anspruchs 12 (Steer-by-Wire-Lenksystem) und des Anspruchs 13 (Kraftfahrzeug) gelöst.

Konkret wird die Aufgabe durch ein Verfahren zum Betreiben eines Steer-by-Wire-Lenksystems für ein Kraftfahrzeug gelöst, das ein Lenkrad und wenigstens einen ersten Aktuator umfasst, der die Drehstellung des Lenkrades steuert, und eine Lenkeinrichtung, insbesondere eine Zahnstange, und wenigstens einen zweiten Aktuator aufweist, der zum Steuern der Lenkstellung wenigstens eines Rades mit der Lenkeinrichtung zusammenwirkt, wobei der erste Aktuator mit dem zweiten Aktuator zur Übertragung eines Lenkstellsignals signalverbunden ist, wobei bei dem Verfahren:
- der erste Aktuator ein Lenkgegenmoment in das Lenkrad einleitet, das einem Fahrerlenkmoment zur Vermittlung eines realen Lenkgefühls entgegenwirkt; und
- der erste Aktuator ein in abwechselnde Lenkrad-Drehrichtungen wirkendes Vibrationsdrehmoment in das Lenkrad zur Erzeugung von Lenkradvibrationen einleitet.

Erfindungsgemäß wird bei dem Verfahren:
- der erste Aktuator so angesteuert wird, dass sich die Amplitude des Vibrationsmoments erhöht;
- ein Bewegungsverhalten der Lenkeinrichtung überwacht wird, wobei bei Erfassen einer Vibrationsbewegung der Lenkeinrichtung das Erhöhen der Amplitude des Vibrationsmoments gestoppt wird; und
- der erste Aktuator so angesteuert wird, dass die Amplitude des Vibrationsmoments auf ihrem gestoppten Niveau gehalten oder um einen vorbestimmten Wert reduziert wird, wobei die Amplitude des Vibrationsmoments auf dem gestoppten Niveau oder dem reduzierten Wert so lange gehalten wird, bis sich die erfasste Vibrationsbewegung der Lenkeinrichtung zumindest verringert.

Die Erfindung hat den wesentlichen Vorteil, dass durch Einleiten eines Vibrationsmoments, insbesondere zusätzlich zu dem Lenkgegenmoment, in das Lenkrad die entstehenden Vibrationen bzw. Schwingungen des Lenkrads, welche Schwingbewegungen des Lenkrads um seine Drehachse entsprechen, nicht oder zumindest nur reduziert auf die Lenkeinrichtung, insbesondere eine mit dem wenigstens einen Rad zum Lenken verbundene Lenkstange bzw. Zahnstange, übertragen werden. Bei dem Steer-by-Wire-System ist bzw. wird die Drehstellung des Lenkrades und die Lenkstellung des wenigstens einen Rades miteinander ausgerichtet und somit synchronisiert. Die Ausrichtung wird dabei durch Ansteuern des ersten Aktuators und/oder des zweiten Aktuators durchgeführt. Das erfindungsgemäße Verfahren zeigt eine verbesserte Lösung auf, um zu verhindern, dass bei Einleiten eines Vibrationsmoments in das Lenkrad jene Lenkradbewegung auf die Lenkeinrichtung, insbesondere Lenk- oder Zahnstange, übertragen wird, die aus der Vibrations- bzw. Schwingungsbewegung des Lenkrades zur Warnung des Fahrers resultiert.

Das Lenkrad ist also durch den ersten Aktuator derart betätigbar, dass dem Fahrer mittels Lenkradvibrationen eine Warnung vermittelt wird, vorteilhafterweise ohne dass das Fahrverhalten des Kraftfahrzeugs beeinflusst wird. Das Kraftfahrzeug zeigt daher selbst bei Einleiten eines Vibrationsmoments in das Lenkrad ein stabiles und sicheres Fahrverhalten. Befindet sich beispielsweise das Kraftfahrzeug im Fahrbetrieb, in dem es auf einer Fahrbahn bewegt wird, und verlässt gewollt oder ungewollt die Spur der Fahrbahn, kann in das Lenkrad ein Vibrationsmoment ohne eine spürbare Fahrzeugreaktion eingeleitet werden. Dazu kann der erste Aktuator mit einer Steuereinheit signalverbunden sein, die dazu angepasst ist, eine Spurhaltefunktion auszuführen und den ersten Aktuator bei Bedarf entsprechend zum Einleiten eines Vibrationsmoments in das Lenkrad anzusteuern.

Alternativ kann das Lenkrad durch den ersten Aktuator so angesteuert werden, dass ein Drehmoment in das Lenkrad eingeleitet wird, das einen oder mehrere große Drehwinkelveränderungen des Lenkrads bewirkt. Dies kann bspw. bei einer Einschlafüberwachung des Fahrers von Vorteil sein, da der Fahrer in diesem Fall durch den entsprechend großen Lenkeinschlag auf sein Einschlafen hin aufmerksam gemacht werden kann. Andere nicht genannte Warnungen durch ein Vibrationsmoment über das Lenkrad sind möglich. Das Einleiten eines Vibrationsmoments durch den ersten Aktuator in das Lenkrad erfolgt vorzugsweise in einem Zustand bzw. einer Situation, in dem/der eine Warnung des Fahrers erforderlich ist. Es ist aber auch möglich, dass das Einleiten eines Vibrationsmoments in das Lenkrad eine andere Aufgabe erfüllen kann.

Vorteilhafterweise wird bei dem Verfahren das in das Lenkrad durch den ersten Aktuator eingeleitete Vibrationsmoment so lange angepasst, konkret die Amplitude des Vibrationsmoments so lange erhöht, bis eine Vibrationsbewegung der Lenkeinrichtung detektiert wird. Die Vibrationsbewegung entspricht im Falle einer Lenkstange, insbesondere einer Zahnstange, einer Positionsveränderung der Lenkstange in abwechselnde Längsrichtungen der Lenkstange. Insbesondere führt die Lenkstange im Vibrationsfall oder Schwingungsfall eine aufeinanderfolgende sich abwechselnde längsaxiale Bewegung durch. Zusätzlich oder alternativ kann die Lenkstange in einer Querrichtung vibrieren bzw. schwingen.

Wird nun eine Vibrationsbewegung der Lenkeinrichtung erfasst, wird das Erhöhen der Amplitude des Vibrationsmoments vorteilhafterweise gestoppt und die Amplitude vorteilhafterweise entweder auf dem Wert des gestoppten Niveaus gehalten oder um einen bestimmten Wert reduziert. Die Schwingungsmomentamplitude wird so lange auf dem Wert des gestoppten Niveaus oder dem reduzierten Wert gehalten, bis sich die erfasste Vibrationsbewegung der Lenkeinrichtung zumindest verringert oder sogar zur Gänze verschwindet. Durch das Halten der Amplitude des Vibrationsmoments auf dem gestoppten Niveau oder dem reduzierten Wert beruhigt sich die Lenkeinrichtung, sodass die Vibration bzw. das Schwingen zurückgeht, bevorzugt soweit, bis keine Vibrationsbewegungen der Lenkreinrichtung mehr erfasst werden. Es ist möglich, dass, wenn die Vibrationsbewegungen nicht unmittelbar oder innerhalb einer bestimmten, gewünschten Zeitspanne zurückgehen, die Amplitude des Vibrationsmoments weiter reduziert wird. Dies kann so lange erfolgen, bis ein Rückgang der Vibrationsbewegung der Lenkeinrichtung erfasst wird.

Bevorzugt ist die Amplitude des Vibrationsmoments während dem Betrieb, insbesondere kontinuierlich, einstellbar. Dies hat den Vorteil, dass auf die Vibrationsbewegung der Lenkeinrichtung schnell und gezielt reagiert werden kann, um diese zu reduzieren bzw. vollständig zu unterbinden.

Bei einer bevorzugten Ausführungsform wird die Amplitude des Vibrationsmoments über eine vorbestimmte Zeitspanne schrittweise erhöht. Dies hat den Vorteil, dass das Vibrationsmoment so lange wie möglich verstärkt wird, ohne eine Vibrationsbewegung der Lenkeinrichtung zu bewirken. Damit ist die Einstellung eines maximalen Vibrationsmoments möglich. Dies erhöht den Nutzungsbereich zur Ausgabe einer Warnung mittels Vibrationsmoment.

Bei einer weiteren vorteilhaften Ausführungsform leitet der erste Aktuator ein Drehmoment in das Lenkrad ein, welches einem mit dem Vibrationsmoment überlagerten Lenkgegenmoment entspricht. Insbesondere wird für das Einleiten des Lenkgegenmoments, das dem Lenkmoment des Fahrers entgegenwirkt und diesem somit ein reales Fahrgefühl vermittelt, und für das Einleiten des Vibrationsmoments ein und derselbe (erste) Aktuator verwendet. Dies spart Kosten und trägt zur Kompaktheit des Steer-by-Wire-Lenksystems bei. Bei dieser Ausführungsform wird also der erste Aktuator derart angesteuert, dass dieser einerseits dem Fahrer ein Lenkgegenmoment und andererseits ein Vibrationsmoment am oder im Lenkrad als Widerstand und Schwingbewegung spüren lässt. Dazu ist vorzugsweise eine Steuereinheit des Steer-by-Wire-Lenksystems angepasst, um den ersten Aktuator dementsprechend anzusteuern.

Vorzugsweise wird der erste Aktuator so angesteuert, dass bei einem Erfassen einer Vibrationsbewegung der Lenkeinrichtung die Amplitude des Vibrationsmoments um 1% bis 25%, insbesondere 1% bis 20%, bevorzugt 1% bis 10% reduziert wird. Es sei darauf hingewiesen, dass weitere Abstufungen der prozentualen Reduzierung des Amplitudenwertes des Vibrationsmoments möglich sind.

Bei einer bevorzugten Ausführungsform wird wenigstens ein Bandpassfilter zum Erfassen von Vibrationsbewegungen der Lenkeinrichtung verwendet, der auf den Frequenzbereich des Vibrationsmoments eingestellt ist. Dies stellt eine einfache und kostengünstige Lösung dar, um eine Schwingungs- bzw. Vibrationsbewegung der Lenkeinrichtung zu erkennen, die aus dem in das Lenkrad eingeleiteten Vibrationsmoment resultiert. Der Bandpassfilter ist vorzugsweise derart eingestellt bzw. konfiguriert, dass dieser lediglich Signale passieren lässt, die im Frequenzbereich des Vibrationsmoments liegen.

Bevorzugt wird das Erhöhen der Amplitude des Vibrationsmoments gestoppt, wenn ein durch den Bandpassfilter gefiltertes Signal einen vorbestimmten Schwellenwert erreicht oder überschreitet. So kann unmittelbar auf das Auftreten einer Vibrationsbewegung der Lenkeinrichtung reagiert werden und entsprechend der erste Aktuator angesteuert werden, um die Erhöhung der Amplitude des Vibrationsmoments zu stoppen und bei Bedarf zu reduzieren.

Weiter vorteilhaft ist vorgesehen, dass der zweite Aktuator mit einem Signal, insbesondere einem Lenkstellsignal, angesteuert wird, von dem ein das Vibrationsmoment initiierendes Signal herausgerechnet ist/wird. Insbesondere kann dieser Verfahrensschritt unterstützend zur weiteren Reduzierung von unerwünschten Lenkeinflüssen vorgesehen werden.

Zudem betrifft die Erfindung eine Steuereinheit zum Betreiben eines Steer-by-Wire-Lenksystems für ein Kraftfahrzeug, das ein Lenkrad und wenigstens einen ersten Aktuator umfasst, der die Drehstellung des Lenkrades steuert, und eine Lenkeinrichtung, insbesondere eine Zahnstange, und wenigstens einen zweiten Aktuator aufweist, der zum Steuern der Lenkstellung wenigstens eines Rades mit der Lenkeinrichtung zusammenwirkt, wobei der erste Aktuator mit dem zweiten Aktuator zur Übertragung eines Lenkstellsignals signalverbunden ist. Vorteilhafterweise ist die Steuereinheit zur Ausführung der erfindungsgemäß vorgesehenen Verfahrensschritte, insbesondere gemäß den vorstehend beschriebenen Verfahrensschritten ausgebildet. Insbesondere ist die Steuereinheit dazu angepasst, folgende Schritte auszuführen:
- Ansteuern des ersten Aktuators derart, dass ein Lenkgegenmoment in das Lenkrad eingeleitet wird, das einem Fahrerlenkmoment zur Vermittlung eines realen Lenkgefühls entgegenwirkt;
- Ansteuern des ersten Aktuators derart, dass ein in abwechselnde Lenkrad-Drehrichtungen wirkendes Vibrationsdrehmoment in das Lenkrad zur Erzeugung von Lenkradvibrationen eingeleitet wird;
- Ansteuern des ersten Aktuators derart, dass sich die Amplitude des Vibrationsmoments erhöht;
- Überwachen eines Bewegungsverhaltens der Lenkeinrichtung, wobei bei Erfassen einer Vibrationsbewegung der Lenkeinrichtung das Erhöhen der Amplitude des Vibrationsmoments gestoppt wird; und
- Ansteuern des ersten Aktuators derart, dass die Amplitude des Vibrationsmoments auf ihrem gestoppten Niveau gehalten oder um einen vorbestimmten Wert reduziert wird, wobei die Amplitude des Vibrationsmoments auf dem gestoppten Niveau oder dem reduzierten Wert so lange gehalten wird, bis sich die erfasste Vibrationsbewegung der Lenkeinrichtung zumindest verringert.

Vorzugsweise weist die Steuereinheit einen Vibrationsgeneratorabschnitt auf, der dazu angepasst ist, ein Vibrationsmomentsignal auszugeben. Der Vibrationsgeneratorabschnitt kommuniziert bevorzugt mit dem vorgenannten Bandpassfilter signalübertragend. Der Vibrationsgeneratorabschnitt kann ein bandgefiltertes Signal empfangen, das bspw. bei oder nach Überschreiten eines vorbestimmten Schwellenwertes an den Vibrationsgeneratorabschnitt gesendet wird. Der Vibrationsgeneratorabschnitt ist vorzugsweise dazu angepasst, ein Vibrationsmomentsignal zur Erhöhung, insbesondere zur schrittweisen Erhöhung, der Amplitude des Vibrationsmoments an den ersten Aktuator zu senden. Der Vibrationsgeneratorabschnitt ist bevorzugt so angepasst, dass dieser, wenn er ein bandgefiltertes Signal empfängt, das den vorbestimmten Schwellenwert überschreitet, ein Vibrationsmomentsignal bereitstellt, das eine Erhöhung der Amplitude des Vibrationsmoments stoppt und auf dem gestoppten Niveau beibehält oder die Amplitude um wenigstens einen bestimmten Wert reduziert.

Es ist von Vorteil, wenn die Steuereinheit wenigstens einen Addierabschnitt aufweist, der das Vibrationsmomentsignal des Vibrationsgeneratorabschnitts und ein Lenkgegenmomentsignal miteinander kombiniert, insbesondere addiert. Der Addierabschnitt ist vorzugsweise in signalübertragender Richtung zwischen dem Vibrationsgeneratorabschnitt und dem ersten Aktuator angeordnet. Der Addierabschnitt ist mit dem ersten Aktuator signalübertragend verbunden. Der Addierabschnitt übermittelt vorzugsweise an den ersten Aktuator ein Motoranfragedrehmomentsignal, das sich aus dem Lenkgegenmomentsignal und dem Vibrationsmomentsignal zusammensetzt.

Zur Signalübertragung ist die Steuereinheit vorzugsweise mit wenigstens einem Datenbus mit dem ersten Aktuator und/oder mit dem zweiten Aktuator verbunden. Die Steuereinheit ist vorzugsweise ein Teil des Steer-by-Wire-Lenksystems, kann aber auch ein Teil einer übergeordneten Fahrzeugsteuerung sein.

Des Weiteren betrifft die Erfindung ein Verfahren zum Betreiben eines Steer-by-Wire-Lenksystems für ein Kraftfahrzeug, das ein Lenkrad und wenigstens einen ersten Aktuator umfasst, der die Drehstellung des Lenkrades steuert, und eine Lenkeinrichtung, insbesondere eine Zahnstange, und wenigstens einen zweiten Aktuator aufweist, der zum Steuern der Lenkstellung wenigstens eines Rades mit der Lenkeinrichtung zusammenwirkt, wobei der erste Aktuator mit dem zweiten Aktuator zur Übertragung eines Lenkstellsignals signalverbunden ist, wobei bei dem Verfahren:
- der erste Aktuator ein Lenkgegenmoment in das Lenkrad einleitet, das einem Fahrerlenkmoment zur Vermittlung eines realen Lenkgefühls entgegenwirkt;
- der erste Aktuator ein in abwechselnde Lenkrad-Drehrichtungen wirkendes Vibrationsdrehmoment in das Lenkrad zur Erzeugung von Lenkradvibrationen einleitet; und
- der zweite Aktuator mit einem Signal, insbesondere einem Lenkstellsignal, angesteuert wird, von dem ein das Vibrationsmoment initiierendes Signal herausgerechnet ist/wird.

Dies hat den Vorteil, dass insbesondere zur weiteren Kostensenkung eine Vibrations- oder Schwingungsüberwachung der Lenkeinrichtung, insbesondere der Lenkstange bzw. Zahnstange, entfallen kann. Da das das Vibrationsmoment initiierende Signal vorbekannt ist, kann dieses von dem Signal, mit dem der zweite Aktuator zur Betätigung der Lenkeinrichtung angesteuert wird, abgezogen werden. Das bedeutet, dass zwar der erste Aktuator mit einem Signal angesteuert wird, das diesen zumindest ein Vibrationsmoment in das Lenkrad einleiten lässt. Aber der zweite Aktuator durch ein Signal angesteuert wird, aus dem das das Vibrationsmoment initiierende Signal herausgerechnet ist. Dies ist einfach umsetzbar und kostengünstig.

Weiter betrifft die Erfindung eine Steuereinheit zum Betreiben eines Steer-by-Wire-Lenksystems für ein Kraftfahrzeug, das ein Lenkrad und wenigstens einen ersten Aktuator umfasst, der die Drehstellung des Lenkrades steuert, und eine Lenkeinrichtung, insbesondere eine Zahnstange, und wenigstens einen zweiten Aktuator aufweist, der zum Steuern der Lenkstellung wenigstens eines Rades mit der Lenkeinrichtung zusammenwirkt, wobei der erste Aktuator mit dem zweiten Aktuator zur Übertragung eines Lenkstellsignals signalverbunden ist, wobei die Steuereinheit dazu angepasst ist, folgende Schritte auszuführen:
- Ansteuern des ersten Aktuators derart, dass ein Lenkgegenmoment in das Lenkrad eingeleitet wird, das einem Fahrerlenkmoment zur Vermittlung eines realen Lenkgefühls entgegenwirkt;
- Ansteuern des ersten Aktuators derart, dass ein in abwechselnde Lenkrad-Drehrichtungen wirkendes Vibrationsdrehmoment in das Lenkrad zur Erzeugung von Lenkradvibrationen eingeleitet wird; und
- Ansteuern des zweiten Aktuators mit einem Signal, insbesondere einem Lenkstellsignal, von dem ein das Vibrationsmoment initiierendes Signal herausgerechnet ist/wird.

Vorzugsweise weist die Steuereinheit einen Vibrationsgeneratorabschnitt auf, der dazu angepasst ist, ein Vibrationsmomentsignal auszugeben. Es ist von Vorteil, wenn die Steuereinheit wenigstens einen Addierabschnitt aufweist, der das Vibrationsmomentsignal des Vibrationsgeneratorabschnitts und ein Lenkgegenmomentsignal miteinander kombiniert, insbesondere addiert. Der Addierabschnitt ist vorzugsweise in signalübertragender Richtung zwischen dem Vibrationsgeneratorabschnitt und dem ersten Aktuator angeordnet. Der Addierabschnitt ist mit dem ersten Aktuator signalübertragend verbunden. Der Addierabschnitt übermittelt vorzugsweise an den ersten Aktuator ein Motoranfragedrehmomentsignal, das sich aus dem Lenkgegenmomentsignal und dem Vibrationsmomentsignal zusammensetzt.

Vorzugsweise weist die Steuereinheit wenigstens einen Subtrahierabschnitt auf, der ein Referenzpositionssignal der Lenkeinrichtung zur Lenkstellung des wenigstens einen Rades empfängt, das bekannte Vibrationsmomentsignal des Vibrationsgeneratorabschnitts empfängt und von dem Referenzpositionssignal das bekannte Vibrationsmomentsignal subtrahiert bzw. dieses herausrechnet. Der Addierabschnitt ist vorzugsweise mit dem ersten Aktuator, dem Vibrationsgeneratorabschnitt und dem zweiten Aktuator signalübertragend verbunden. Der Subtrahierabschnitt übermittelt vorzugsweise an den zweiten Aktuator ein Referenzpositionssignal an den zweiten Aktuator, das von dem Vibrationsmomentsignal bereinigt ist. So wird vorteilhafterweise erreicht, dass die für die Lenkstellung des wenigstens einen Rades verantwortliche Lenkeinrichtung frei von durch das Vibrationsmoment bedingten Vibrationen bzw. Schwingungen ist.

Zur Signalübertragung sind ist die Steuereinheit vorzugsweise mit wenigstens einem Datenbus mit dem ersten Aktuator und/oder mit dem zweiten Aktuator verbunden. Die Steuereinheit ist vorzugsweise ein Teil des Steer-by-Wire-Lenksystems, kann aber auch ein Teil einer übergeordneten Fahrzeugsteuerung sein.

Im Rahmen der Erfindung wird ein Steer-by-Wire-Lenksystem mit wenigstens einer der vorstehend genannten Steuereinheiten beansprucht und offenbart. Bei dem Steer-by-Wire-Lenksystem ist der erste Aktuator mit dem Lenkrad wirkverbunden, um eine Lenkgegenmoment in das Lenkrad einzuleiten, das dem Fahrerlenkmoment entgegenwirkt. Der erste Aktuator kann als "Hand Wheel Actuator" (HWA) oder Feedback-Aktuator (FBA) bezeichnet werden. Der zweite Aktuator des Steer-by-Wire-Lenksystems ist der Lenkeinrichtung zugeordnet, um zur Lenkstellung wenigstens eines Rades mit der Lenkeinrichtung zusammenzuwirken. Der zweite Aktuator kann als Lenksteller oder "Road Wheel Actuator" (RWA) bezeichnet werden.

Zudem betrifft die Erfindung ein Kraftfahrzeug mit wenigstens einer der erfindungsgemäßen Steuereinheiten und/oder mit einem erfindungsgemäßen Steer-by-Wire-Lenksystem.

Zu den Vorteilen des Steer-by-Wire-Lenksystems und des Kraftfahrzeugs wird auf die im Zusammenhang mit den Verfahren sowie den Steuereinheiten erläuterten Vorteile verwiesen. Darüber hinaus können das Steer-by-Wire-Lenksystem und das Kraftfahrzeug alternativ oder zusätzlich einzelne oder eine Kombination mehrerer zuvor in Bezug auf die Verfahren bzw. die Steuereinheiten genannter Merkmale aufweisen.

Die Erfindung wird nachstehend anhand von Ausführungsbeispielen unter Bezug auf die beigefügten schematischen Figuren mit weiteren Einzelheiten näher erläutert.

In diesen zeigen,
- Fig. 1: eine schematische Darstellung eines Steer-by-Wire-Lenksystems nach einem bevorzugten erfindungsgemäßen Ausführungsbeispiel,
- Fig. 2: ein Diagramm des Verlaufs einer Amplitude eines in ein Lenkrad des Steer-by-Wire-Lenksystems nach Fig. 1 eingeleiteten Vibrationsmoments;
- Fig. 3: ein Blockdiagramm der Schritte eines Verfahrens nach einem bevorzugten erfindungsgemäßen Ausführungsbeispiel, das beispielsweise in das Steer-by-Wire-Lenksystem nach Fig. 1 implementiert ist; und
- Fig. 4: ein Blockdiagramm der Schritte eines Verfahrens nach einem weiteren erfindungsgemäßen Ausführungsbeispiel, das beispielsweise in das Steer-by-Wire-Lenksystem nach Fig. 1 implementiert ist.

In der nachfolgenden Beschreibung werden für gleiche oder gleichwirkende Teile dieselben Bezugsziffern verwendet.

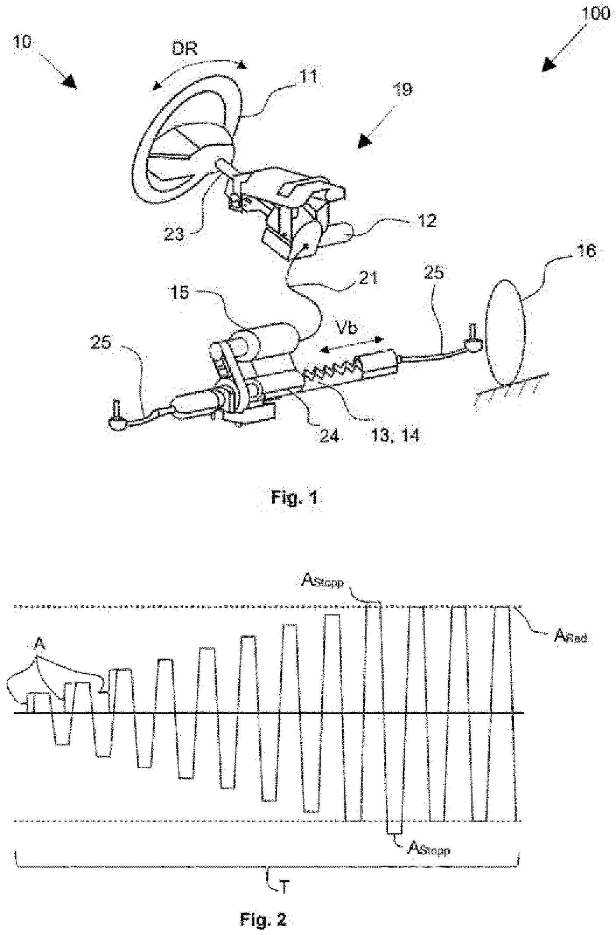

Fig. 1 zeigt schematisch ein Steer-by-Wire-Lenksystem 10 eines Kraftfahrzeugs 100, bspw. eines elektrisch angetriebenen Kraftfahrzeugs, nach einem bevorzugten erfindungsgemäß ausgebildeten Ausführungsbeispiel.

Das Steer-by-Wire-Lenksystem 10 umfasst ein Lenkrad 11 und eine Lenksäule 19. Die Lenksäule 19 umfasst eine Lenkwelle 23, an der das Lenkrad 11 angeordnet ist. Ferner weist das Steer-by-Wire-Lenksystem 10 einen ersten Aktuator 12 auf, der mit dem Lenkrad 11 drehmomentübertragend gekoppelt ist. Der erste Aktuator 12 ist an der Lenksäule 19 angeordnet. Da bei dem Steer-by-Wire-Lenksystem 10 keine mechanische Verbindung zwischen dem Lenkrad 11 und den zu lenkenden Rädern 16 besteht, kommt der erste Aktuator 12 zum Einsatz, um dem Fahrer ein realistisches Fahrgefühl als Feedback zu vermitteln. Dazu leitet der erste Aktuator 12 ein Lenkgegenmoment (Feedbackmoment) in das Lenkrad 11 ein, das abhängig von einer Vielzahl von Parametern ist.

Wie in der schematischen Darstellung des Steer-by-Wire-Lenksystems 10 gemäß Fig. 1 zu sehen ist, ist der erste Aktuator 12 an der Lenksäule 19 angeordnet. Der erste Aktuator 12 überträgt im Fahrbetrieb das Lenkgegenmoment auf die Lenkwelle 23, die wiederum dieses Lenkgegenmoment auf das drehfest mit der Lenkwelle 23 verbundene Lenkrad 11 überträgt. Der erste Aktuator 12 kann dazu vorzugsweise einen Elektromotor aufweisen.

Aus der Fig. 1 geht weiter hervor, dass die Lenksäule 19, insbesondere der erste Aktuator 12 der Lenksäule 19, über eine elektrische Leitung 21 mit einem zweiten Aktuator 15 verbunden ist. Der zweite Aktuator 15 umfasst einen Stellmotor, der ein Lenkungs-Stellmoment in ein Lenkgetriebe 24 einleitet. Im Lenkgetriebe 24 wird das Lenkungs-Stellmoment auf eine Lenkeinrichtung 13, konkret auf eine Zahnstange 14 in eine Translationsbewegung der Spurstangen 25 umgesetzt. Dadurch wird ein Lenkeinschlag von mit der Spurstange 25 verbundenen lenkbaren Rädern 16 bewirkt. Der zweite Aktuator 15 ist im Bereich der Zahnstange 14 angeordnet.

Zusätzlich erfüllt der in Fig. 1 gezeigte erste Aktuator 12 eine weitere Aufgabe, nämlich, vorzugsweise in einem Betriebsmodus des Kraftfahrzeugs 100, bei Bedarf neben dem Lenkgegenmoment ein Vibrationsmoment in das Lenkrad 11 einzuleiten, um dem Fahrer einen Warnhinweis zu vermitteln. Das Steer-by-Wire-Lenksystem 10 weist wenigstens eine Steuereinheit 10' auf, um zumindest den ersten Aktuator 12 und den zweiten Aktuator 15 anzusteuern.

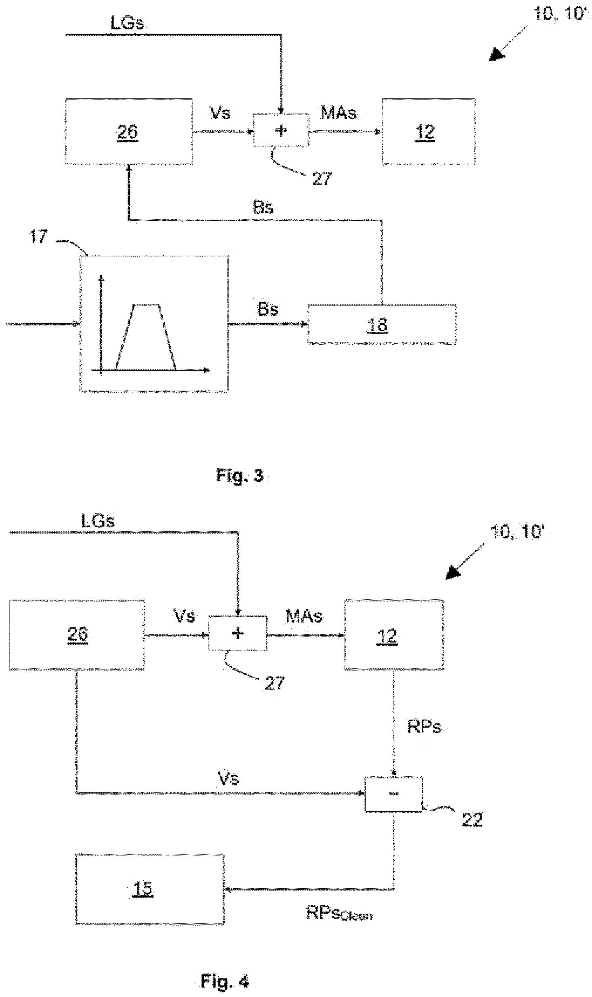

Gemäß Fig. 3 ist ein Blockdiagramm mit verschiedenen Komponenten bzw. Abschnitten einer Steuereinheit 10' des Steer-by-Wire-Lenksystems 10 und deren Verbindung gezeigt, die mit dem ersten Aktuator 12 und dem zweiten Aktuator 15 zur Steuerung signalkommunizierend verbunden ist. Die Steuereinheit 10' umfasst einen Vibrationsgeneratorabschnitt 26, der dazu angepasst ist, ein Vibrationsmomentsignal Vs auszugeben. Der Vibrationsgeneratorabschnitt 26 kommuniziert mit einem Bandpassfilter 17 signalübertragend. Der Vibrationsgeneratorabschnitt 26 kann ein bandgefiltertes Signal Bs empfangen, das bspw. bei oder nach Überschreiten eines vorbestimmten Schwellenwertes 18 an den Vibrationsgeneratorabschnitt 26 gesendet wird. Der Vibrationsgeneratorabschnitt 26 ist dazu angepasst, ein Vibrationsmomentsignal Vs zur Erhöhung, insbesondere zur schrittweisen Erhöhung, der Amplitude A des Vibrationsmoments an den ersten Aktuator 12 zu senden.

Der Vibrationsgeneratorabschnitt 26 ist so angepasst, dass dieser, wenn er ein bandgefiltertes Signal Bs empfängt, das den vorbestimmten Schwellenwert 18 überschreitet, ein Vibrationsmomentsignal an den ersten Aktuator 12 sendet, das eine Erhöhung der Amplitude A des Vibrationsmoments stoppt und auf dem gestoppten Niveau A_{Stopp} beibehält oder die Amplitude A um wenigstens einen bestimmten Wert A_{Red} reduziert.

Die Steuereinheit 10' umfasst ferner einen Addierabschnitt 27, der das Vibrationsmomentsignal Vs des Vibrationsgeneratorabschnitts 26 und ein Lenkgegenmomentsignal LGs miteinander kombiniert, insbesondere addiert. Der Addierabschnitt 27 ist in signalübertragender Richtung zwischen dem Vibrationsgeneratorabschnitt 26 und dem ersten Aktuator 12 angeordnet. Der Addierabschnitt 27 ist mit dem ersten Aktuator 12 signalübertragend verbunden. Der Addierabschnitt 27 übermittelt an den ersten Aktuator 12 ein Motoranfragedrehmomentsignal MAs, das sich aus dem Lenkgegenmomentsignal LGs und dem Vibrationsmomentsignal Vs zusammensetzt.

Ferner umfasst die Steuereinheit 10' einen Bandpassfilter 17 zum Erfassen von Vibrationsbewegungen Vb der Zahnstange 14. Der Bandpassfilter 17 ist auf den Frequenzbereich des Vibrationsmoments eingestellt, um eine Schwingungs- bzw. Vibrationsbewegung Vb der Zahnstange 14 zu erkennen, die aus dem in das Lenkrad 11 eingeleitete Vibrationsmoment resultiert. Der Bandpassfilter 17 ist derart eingestellt bzw. konfiguriert, dass dieser lediglich Signale passieren lässt, die im Frequenzbereich des Vibrationsmoments liegen.

Die Vibrationsbewegung Vb der Zahnstange 14 entspricht einer Positionsveränderung der Zahnstange 14 in abwechselnde Längsrichtungen der Zahnstange 14. Insbesondere führt die Zahnstange 14 im Vibrationsfall bzw. Schwingungsfall eine aufeinanderfolgende sich abwechselnde längsaxiale Bewegung durch. Zusätzlich oder alternativ kann die Zahnstange 14 in einer Querrichtung vibrieren bzw. schwingen.

Zur Signalübertragung sind ist die Steuereinheit 10' mit wenigstens einem Datenbus mit dem ersten Aktuator 12 und/oder zweiten Aktuator 15 verbunden. Die Steuereinheit 10' ist ein Teil des Steer-by-Wire-Lenksystems 10, kann aber auch ein Teil einer übergeordneten Fahrzeugsteuerung sein.

Nachfolgend wird anhand von Fig. 2 und Fig. 3 ein erfindungsgemäßes Verfahren zum Betreiben des Steer-by-Wire-Lenksystems 10 des Kraftfahrzeugs 100 beschrieben. Die Steuereinheit 10' ist dazu angepasst, die nachfolgenden Schritte des Verfahrens auszuführen.

Bei dem Verfahren leitet der erste Aktuator 12 ein Lenkgegenmoment in das Lenkrad 11 ein, das einem Fahrerlenkmoment zur Vermittlung eines realen Lenkgefühls entgegenwirkt. Dazu wird der erste Aktuator 12 mit einem Lenkgegenmomentsignal LGs angesteuert. Wie in Fig. 3 erkennbar, wird das Lenkgegenmomentsignal LGs über den Addierabschnitt 27 geführt, von dem anschließend ein

Motoranfragedrehmomentsignal MAs, das dem Lenkgegenmomentsignal LGs entspricht, an den ersten Aktuator 12 zu dessen Ansteuerung geht. Dies erfolgt bevorzugt durch die Steuereinheit 10'.

Sollte es notwendig sein, dem Fahrer einen Hinweis oder eine Warnung, bspw. in einer bestimmten Fahrsituation, mitzuteilen, leitet der erste Aktuator 12 ein in abwechselnde Lenkrad-Drehrichtungen DR wirkendes Vibrationsdrehmoment in das Lenkrad 11 zur Erzeugung von Lenkradvibrationen ein. Dazu generiert der Vibrationsgeneratorabschnitt 26 ein Vibrationsmomentsignal Vs, das mit dem Lenkgegenmomentsignal LGs durch den Addierabschnitt 27 kombiniert wird. Dies kann durch Addieren der Signale oder eine andere Rechenfunktion erfolgen. In diesem Fall sendet der Addierabschnitt 27 ein Motoranfragedrehmomentsignal MAs zur Ansteuerung an den ersten Aktuator 12, das der Kombination aus Vibrationsmomentsignal Vs und Lenkgegenmomentsignal LGs entspricht. Der erste Aktuator 12 leitet dann ein dem Motoranfragedrehmoment MAs entsprechendes Lenkgegenmoment und/oder Vibrationsmoment in das Lenkrad 11 ein.

Anschließend wird der erste Aktuator 12 so angesteuert wird, dass sich die Amplitude A des Vibrationsmoments erhöht. Dies ist in dem Diagramm gemäß Fig. 2 zu sehen, in dem das Amplitudensignal über eine Zeitspanne T schrittweise erhöht wird.

Parallel wird ein Bewegungsverhalten der Zahnstange 14 überwacht, wobei bei Erfassen einer Vibrationsbewegung Vb der Zahnstange 14 das Erhöhen der Amplitude A des Vibrationsmoments gestoppt wird. Das Erfassen von Vibrationsbewegungen Vb erfolgt durch den Bandpassfilter 17. Entspricht ein durch den Bandpassfilter 17 gefiltertes Signal Bs einem vorbestimmten Schwellenwert 18 (siehe Fig. 3) oder überschreitet ein durch den Bandpassfilter 17 gefiltertes Signal Bs einen vorbestimmten Schwellenwert 18, wird das Erhöhen der Amplitude A des Vibrationsmoments gestoppt.

Der Vibrationsgeneratorabschnitt 26 empfängt dazu das gefilterte Signal Bs und generiert ein Vibrationsmomentsignal Vs derart, dass die Amplitude A des Vibrationsmoments auf dem Wert des gestoppten Niveaus A_{Stopp} verbleibt oder die Amplitude A um einen bestimmten Wert A_{Red} reduziert wird. Der Amplitudenwert des gestoppten Niveaus A_{Stopp} und der reduzierte Amplitudenwert A_{Red} ist in dem Diagramm gemäß Fig. 2 zu erkennen.

Die Amplitude A des Vibrationsmoments wird dann auf Wert des gestoppten Niveaus A_{Stopp} oder dem reduzierten Wert A_{Red} so lange gehalten, bis sich die erfasste Vibrationsbewegung Vb der Zahnstange 14 zumindest verringert oder sogar zur Gänze zurückgeht. Das Halten des Amplitudenwertes kann so lange erfolgen, bis der Wert des durch den Bandpassfilter 17 gefilterten Signals Bs wieder unter den vorbestimmten Schwellenwert 18 fällt. So wird verhindert, dass unerwünschte Lenkmomentschwingungen des Lenkrads 11 die Lenkstellung der Räder 16 beeinflussen. Das vorstehend beschriebene Verfahren wird wiederholt, wenn eine weitere Warnung durch Lenkradvibrationen dem Fahrer vermittelt werden soll.

Gemäß Fig. 4 ist ein Blockdiagramm mit verschiedenen Komponenten bzw. Abschnitten einer Steuereinheit 10' gezeigt, die bei dem Steer-by-Wire-Lenksystem 10 gemäß Fig. 1 zur Anwendung kommen kann. Fig. 4 zeigt die Verbindung und Anordnung der verschiedenen Komponenten bzw. Abschnitte der Steuereinheit 10', die mit dem ersten Aktuator 12 und dem zweiten Aktuator 15 zur Steuerung signalkommunizierend verbunden ist.

Nachfolgend wird anhand der Fig. 4 ein weiteres erfindungsgemäßes Verfahren zum Betreiben des Steer-by-Wire-Lenksystems 10 des Kraftfahrzeugs 100 beschrieben. Die Steuereinheit 10' ist vorzugsweise dazu angepasst, die nachfolgenden Schritte des Verfahrens auszuführen.

Im Unterschied zur Steuereinheit 10' gemäß Fig. 3 weist die Steuereinheit 10' gemäß Fig. 4 keinen Bandpassfilter auf. Zusätzlich weist die Steuereinheit 10' gemäß Fig. 4 hingegen einen Subtrahierabschnitt 22 auf, der ein Referenzpositionssignal RPs für die Zahnstange 14 zur Lenkstellung der Räder 16 empfängt, das bekannte Vibrationsmomentsignal Vs des Vibrationsgeneratorabschnitts 26 empfängt und von dem Referenzpositionssignal RPs das bekannte Vibrationsmomentsignal Vs subtrahiert bzw. dieses herausrechnet. Der Addierabschnitt 27 ist mit dem ersten Aktuator 12, dem Vibrationsgeneratorabschnitt 26 und dem zweiten Aktuator 15 signalübertragend verbunden. Der Subtrahierabschnitt 22 übermittelt an den zweiten Aktuator 15 ein Referenzpositionssignal RPs_{Clean} an den zweiten Aktuator 15, das von dem Vibrationsmomentsignal Vs bereinigt ist. So wird verhindert, dass die für die Lenkstellung der Räder 16 verantwortliche Zahnstange 14 frei von einer durch das Vibrationsmoment bedingten Vibrationsbewegung Vb ist. Die beschriebenen Verfahren können insbesondere auch kombiniert zum Einsatz kommen.

### Bezugszeichenliste

- 10: Steer-by-Wire-Lenksystem
- 10': Steuereinheit
- 11: Lenkrad
- 12: erster Aktuator
- 13: Lenkeinrichtung
- 14: Zahnstange
- 15: zweiter Aktuator
- 16: Rad
- 17: Bandpassfilter
- 18: Schwellenwert
- 19: Lenksäule
- 21: elektrische Leitung
- 22: Subtrahierabschnitt
- 23: Lenkwelle
- 24: Lenkgetriebe
- 25: Spurstangen
- 26: Vibrationsgeneratorabschnitt
- 27: Addierabschnitt

- 100: Kraftfahrzeug

- A: Amplitude des Vibrationsmoments
- DR: Lenkrad-Drehrichtung
- A_{Stopp}: gestopptes Niveau der Amplitude
- A_{Red}: reduzierter Wert der Amplitude
- T: Zeitspanne
- Vs: Vibrationsmomentsignal
- Bs: bandgefiltertes Signal
- LGs: Lenkgegenmomentsignal
- MAs: Motoranfragedrehmomentsignal
- Vb: Vibrationsbewegungen
- RPs: Referenzpositionssignal

## Patentansprüche

1. Verfahren zum Betreiben eines Steer-by-Wire-Lenksystems (10) für ein Kraftfahrzeug, das ein Lenkrad (11) und wenigstens einen ersten Aktuator (12) umfasst, der die Drehstellung des Lenkrads (11) steuert, und eine Lenkeinrichtung (13), insbesondere eine Zahnstange (14), und wenigstens einen zweiten Aktuator (15) aufweist, der zum Steuern der Lenkstellung wenigstens eines Rades (16) mit der Lenkeinrichtung (13) zusammenwirkt, wobei der erste Aktuator (12) mit dem zweiten Aktuator (15) zur Übertragung eines Lenkstellsignals signalverbunden ist, wobei bei dem Verfahren:
- der erste Aktuator (12) ein Lenkgegenmoment in das Lenkrad (11) einleitet, das einem Fahrerlenkmoment zur Vermittlung eines realen Lenkgefühls entgegenwirkt; und
- der erste Aktuator (12) ein in abwechselnde Lenkrad-Drehrichtungen (DR) wirkendes Vibrationsdrehmoment in das Lenkrad (11) zur Erzeugung von Lenkradvibrationen einleitet,
**dadurch gekennzeichnet, dass** bei dem Verfahren:
- der erste Aktuator (12) so angesteuert wird, dass sich die Amplitude (A) des Vibrationsmoments erhöht;
- ein Bewegungsverhalten der Lenkeinrichtung (13) überwacht wird, wobei bei Erfassen einer Vibrationsbewegung der Lenkeinrichtung (13) das Erhöhen der Amplitude (A) des Vibrationsmoments gestoppt wird; und
- der erste Aktuator (12) so angesteuert wird, dass die Amplitude (A) des Vibrationsmoments auf ihrem gestoppten Niveau (A_{Stopp}) gehalten oder um einen vorbestimmten Wert (A_{Red}) reduziert wird, wobei die Amplitude (A) des Vibrationsmoments auf dem gestoppten Niveau (A_{Stopp}) oder dem reduzierten Wert (A_{Red}) so lange gehalten wird, bis sich die erfasste Vibrationsbewegung der Lenkeinrichtung (13) zumindest verringert.

2. Verfahren nach Anspruch 1,
**dadurch gekennzeichnet, dass**
die Amplitude (A) des Vibrationsmoments über eine vorbestimmte Zeitspanne (T) schrittweise erhöht wird.

3. Verfahren nach Anspruch 1 oder 2,
**dadurch gekennzeichnet, dass**
der erste Aktuator (12) ein Drehmoment in das Lenkrad (11) einleitet, welches einem mit dem Vibrationsmoment überlagerten Lenkgegenmoment entspricht.

4. Verfahren nach einem der vorhergehenden Ansprüche,
**dadurch gekennzeichnet, dass**
der erste Aktuator (12) so angesteuert wird, dass bei Erfassen einer Vibrationsbewegung der Lenkeinrichtung (13) die Amplitude (A) des Vibrationsmoments um 1% bis 25%, insbesondere 1% bis 20%, bevorzugt 1% bis 10% reduziert wird.

5. Verfahren nach einem der vorhergehenden Ansprüche,
**dadurch gekennzeichnet, dass**
wenigstens ein Bandpassfilter (17) zum Erfassen von Vibrationsbewegungen der Lenkeinrichtung (13) verwendet wird, der auf den Frequenzbereich des Vibrationsmoments eingestellt ist.

6. Verfahren nach Anspruch 5,
**dadurch gekennzeichnet, dass**
das Erhöhen der Amplitude (A) des Vibrationsmoments gestoppt wird, wenn ein durch den Bandpassfilter (17) gefiltertes Signal einen vorbestimmten Schwellenwert (18) erreicht oder überschreitet.

7. Verfahren nach einem der vorhergehenden Ansprüche,
**dadurch gekennzeichnet, dass**
der zweite Aktuator (15) mit einem Signal, insbesondere einem Lenkstellsignal, angesteuert wird, von dem ein das Vibrationsmoment initiierendes Signal herausgerechnet ist/wird.

8. Steuereinheit zum Betreiben eines Steer-by-Wire-Lenksystems (10) für ein Kraftfahrzeug, das ein Lenkrad (11) und wenigstens einen ersten Aktuator (12) umfasst, der die Drehstellung des Lenkrads (11) steuert, und eine Lenkeinrichtung (13), insbesondere eine Zahnstange (14), und wenigstens einen zweiten Aktuator (15) aufweist, der zum Steuern der Lenkstellung wenigstens eines Rades (16) mit der Lenkeinrichtung (13) zusammenwirkt, wobei der erste Aktuator (12) mit dem zweiten Aktuator (15) zur Übertragung eines Lenkstellsignals signalverbunden ist, wobei die Steuereinheit dazu angepasst ist, folgende Schritte auszuführen:
- Ansteuern des ersten Aktuators (12) derart, dass ein Lenkgegenmoment in das Lenkrad (11) eingeleitet wird, das einem Fahrerlenkmoment zur Vermittlung eines realen Lenkgefühls entgegenwirkt; und
- Ansteuern des ersten Aktuators (12) derart, dass ein in abwechselnde Lenkrad-Drehrichtungen (DR) wirkendes Vibrationsdrehmoment in das Lenkrad (11) zur Erzeugung von Lenkradvibrationen eingeleitet wird,
**dadurch gekennzeichnet, dass** die Steuereinheit weiter dazu angepasst ist, folgende Schritte auszuführen:
- Ansteuern des ersten Aktuators (12) derart, dass sich die Amplitude (A) des Vibrationsmoments erhöht;
- Überwachen eines Bewegungsverhaltens der Lenkeinrichtung (13), wobei bei Erfassen einer Vibrationsbewegung der Lenkeinrichtung (13) das Erhöhen der Amplitude (A) des Vibrationsmoments gestoppt wird; und
- Ansteuern des ersten Aktuators (12) derart, dass die Amplitude (A) des Vibrationsmoments auf ihrem gestoppten Niveau (A_{Stopp}) gehalten oder um einen vorbestimmten Wert (A_{Red}) reduziert wird, wobei die Amplitude (A) des Vibrationsmoments auf dem gestoppten Niveau (A_{Stopp}) oder dem reduzierten Wert (A_{Red}) so lange gehalten wird, bis sich die erfasste Vibrationsbewegung der Lenkeinrichtung (13) zumindest verringert.

9. Steuereinheit nach Anspruch 8,
**dadurch gekennzeichnet, dass**
die Steuereinheit weiter dazu angepasst ist, die Schritte des Verfahrens gemäß einem der Ansprüche 1 bis 7 auszuführen.

10. Verfahren zum Betreiben eines Steer-by-Wire-Lenksystems (10) für ein Kraftfahrzeug, das ein Lenkrad (11) und wenigstens einen ersten Aktuator (12) umfasst, der die Drehstellung des Lenkrads (11) steuert, und eine Lenkeinrichtung (13), insbesondere eine Zahnstange (14), und wenigstens einen zweiten Aktuator (15) aufweist, der zum Steuern der Lenkstellung wenigstens eines Rades (16) mit der Lenkeinrichtung (13) zusammenwirkt, wobei der erste Aktuator (12) mit dem zweiten Aktuator (15) zur Übertragung eines Lenkstellsignals signalverbunden ist, wobei bei dem Verfahren:
- der erste Aktuator (12) ein Lenkgegenmoment in das Lenkrad (11) einleitet, das einem Fahrerlenkmoment zur Vermittlung eines realen Lenkgefühls entgegenwirkt; und
- der erste Aktuator (12) ein in abwechselnde Lenkrad-Drehrichtungen (DR) wirkendes Vibrationsdrehmoment in das Lenkrad (11) zur Erzeugung von Lenkradvibrationen einleitet,
**dadurch gekennzeichnet, dass** bei dem Verfahren:
- der zweite Aktuator (15) mit einem Signal, insbesondere einem Lenkstellsignal, angesteuert wird, von dem ein das Vibrationsmoment initiierendes Signal herausgerechnet ist/wird.

11. Steuereinheit zum Betreiben eines Steer-by-Wire-Lenksystems (10) für ein Kraftfahrzeug, das ein Lenkrad (11) und wenigstens einen ersten Aktuator (12) umfasst, der die Drehstellung des Lenkrads (11) steuert, und eine Lenkeinrichtung (13), insbesondere eine Zahnstange (14), und wenigstens einen zweiten Aktuator (15) aufweist, der zum Steuern der Lenkstellung wenigstens eines Rades (16) mit der Lenkeinrichtung (13) zusammenwirkt, wobei der erste Aktuator (12) mit dem zweiten Aktuator (15) zur Übertragung eines Lenkstellsignals signalverbunden ist, wobei die Steuereinheit dazu angepasst ist, folgende Schritte auszuführen:
- Ansteuern des ersten Aktuators (12) derart, dass ein Lenkgegenmoment in das Lenkrad (11) eingeleitet wird, das einem Fahrerlenkmoment zur Vermittlung eines realen Lenkgefühls entgegenwirkt; und
- Ansteuern des ersten Aktuators (12) derart, dass ein in abwechselnde Lenkrad-Drehrichtungen (DR) wirkendes Vibrationsdrehmoment in das Lenkrad (11) zur Erzeugung von Lenkradvibrationen eingeleitet wird,
**dadurch gekennzeichnet, dass** die Steuereinheit weiter dazu angepasst ist, folgenden Schritt auszuführen:
- Ansteuern des zweiten Aktuators (15) mit einem Signal, insbesondere einem Lenkstellsignal, von dem ein das Vibrationsmoment initiierendes Signal herausgerechnet ist/wird.

12. Steer-by-Wire-Lenksystem mit einer Steuereinheit nach Anspruch 9 oder 11.

13. Kraftfahrzeug mit einer Steuereinheit nach Anspruch 9 oder 11 und/oder einem Steer-by-Wire-Lenksystem nach Anspruch 12.
